# EUROPÄISCHE PATENTANMELDUNG

(11) **EP 4 403 500 A1**
(43) Veröffentlichungstag der Anmeldung: **24.07.2024**
(21) Anmeldenummer: 23217048.0
(22) Anmeldetag: 15.12.2023
(51) Int. Cl.: B65G 43/08, B65G 47/82

(54) **VORRICHTUNG UND VERFAHREN ZUM AUSLEITEN VON STÜCKGÜTERN**

(30) Priorität: 17.01.2023 DE 102023100936
(71) Anmelder: Krones AG, 93073 Neutraubling (DE)
(72) Erfinder: Gut, Thorsten, 93073 Neutraubling (DE)
(74) Vertreter: Bittner, Bernhard

(57) **Zusammenfassung**

Vorrichtung zum Ausschleusen von Behältnissen aus einem Behältnisstrom mit einer Transporteinrichtung (2), welche die Behältnisse entlang einer vorgegebenen Transportrichtung (T) transportiert und mit einer Ausschleuseeinrichtung (4), welche dazu geeignet und bestimmt ist, einzelne dieser Behältnisse (10) aus dem Behältnisstrom und quer zu der Transportrichtung auszuschleusen, wobei die Ausschleuseeinrichtung (4) ein Kontaktelement (42) aufweist, welches quer zu der Transportrichtung bewegbar ist zwischen einer Grundstellung, in welcher es ein Behältnis (10) nicht kontaktiert und einer Ausschleusestellung, in welcher es ein Behältnis (10) kontaktiert, um es aus dem Behältnisstrom auszuschleusen und wobei die Ausschleuseeinrichtung (4) eine Antriebseinrichtung (44) zum Bewegen des Kontaktelements (42) aufweist, dadurch gekennzeichnet, dass die Grundstellung in Abhängigkeit von einer Position der Behältnisse (10) bezüglich der Transporteinrichtung und in der Bewegungsrichtung des Kontaktelements (42) variabel ist.

## Beschreibung

Die vorliegende Erfindung bezieht sich auf eine Vorrichtung und ein Verfahren zum Ausleiten von transportierten Stückgütern und insbesondere von transportierten Behältnissen oder Behältnisgebinden. Im Bereich der getränkeherstellenden Industrie ist es üblich, dass Stückgüter und insbesondere Behältnisse über längere Transportstrecken transportiert werden. Auch ist es bekannt, dass Behältnisse auf das Vorliegen von Fehlern geprüft werden, beispielsweise auf schlecht sitzende Etiketten, nicht ordnungsgemäß angebrachte Verschlüsse, inkorrekte Füllhöhen und dergleichen.

Dabei ist es bekannt, als fehlerhaft erkannte Behältnisse aus einem Behältnisstrom auszuleiten. Zu diesem Zweck werden im Stand der Technik Pusher eingesetzt, welche die Behältnisse üblicherweise quer zum Transportstrom ausleiten. Ein aus dem Stand der Technik bekanntes Standardausleitsystem von Behältnissen ist ein derartiger sogenannter Pusher. Diese mit einem Motor ausgestattete Ausleiteinheit fährt eine definierte Kurve und stößt die fehlerhaften Behältnisse von einem Produktionsband, entweder in einen Container oder auf weitere Ketten eines Ausleitbahnhofs.

Derartige Pushsysteme arbeiten zufriedenstellend, haben jedoch prinzipbedingte Nachteile. Eine der wichtigsten Störgrößen für eine hochwertige Ausleitung ist der Abstand der Behältnisse zu einem Stoßelement wie etwa einer Stoßplatte insbesondere in einer Ausgangsposition, d.h. insbesondere 90° quer zu einer Transportrichtung. Durch die vorgelagerten Maschinen- und Geländeführungen kommen die Behältnisse in der Realität mit einem willkürlichen Abstand, der beispielsweise zwischen 2 und 6 mm liegen kann, an der Ausleiteinrichtung, d. h. dem Pusher an.

Wenn nun die Behältnisse mit unterschiedlichen Abständen an der Ausleiteinrichtung wie etwa dem Pusher ankommen, entsteht der Nachteil, dass, wenn die Behältnisse weiter weg als geplant sind längere Zeit benötigt wird und damit ein höherer Leerhub auftritt. Die Folgen können einerseits ein ruppigeres Auftreffen der Kontaktelemente auf den Behältnissen sein, da der Stößel ja schon eine Weile unterwegs ist.

Ein weiterer Nachteil ergibt sich durch die längere Fahrzeit des Leerhubs insofern als der Trefferpunkt an den Behältnissen nicht mehr mittig ist, sondern beispielsweise später. Auf diese Weise kann das Behältnis ins Trudeln kommen und zu Störungen führen.

Die unterschiedlichen Behältnisse oder Abstände auf einer Transporteinrichtung wie auf einem Band können nicht nur von Maschinengeländer verursacht werden, sondern auch durch unterschiedliche Durchmesser, beispielsweise bei der Mehrwegglassortierung.

Aus der DE 10 2012 219 566 A1 ist ein Verfahren zum Aussondern eines Gegenstands bekannt. Dabei werden Flaschen mittels eines Pushers von einem Förderband ausgesondert.

Der vorliegenden Erfindung liegt die Aufgabe zugrunde, derartige Systeme betriebssicherer zu gestalten und für einen gleichmäßigeren Auswurf der Behältnisse zu sorgen. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Ausschleusen von Behältnissen oder Behältniszusammenstellungen aus einem Behältnisstrom weist eine Transporteinrichtung auf, welche die Behältnisse entlang einer vorgegebenen Transportrichtung transportiert und eine Ausschleuseeinrichtung, welche dazu geeignet und bestimmt ist, einzelne dieser Behältnisse aus dem Behältnisstrom und quer zur Transporteinrichtung auszuschleusen.

Dabei weist die Ausschleuseeinrichtung ein Kontaktelement auf, welches quer zu der Transportrichtung bewegbar ist, zwischen einer Grundstellung, in welcher es ein Behältnis nicht kontaktiert und einer Ausschleusestellung, in welcher es ein Behältnis kontaktiert, um es aus dem Behältnisstrom auszuschleusen.

Weiterhin weist die Ausschleuseeinrichtung eine Antriebseinrichtung zum Bewegen des Kontaktelements auf.

Erfindungsgemäß ist die Grundstellung in Abhängigkeit von einer Position der Behältnisse bezüglich der Transporteinrichtung und in der Bewegungsrichtung des Kontaktelements variabel.

Es wird daher im Rahmen der Erfindung vorgeschlagen, die in Laufrichtung seitliche (insbesondere senkrecht zu der Transportrichtung zu bestimmende) Abweichung der Behältnisse bzw. der Behältnisse und insbesondere jedes einzelnen Behältnisses und insbesondere eines oder jedes einzelnen Behältnisses zu einer idealen Position zu ermitteln.

Im Rahmen der vorliegenden Erfindung wird im Weiteren aus Gründen der Vereinfachung von Behältnissen gesprochen. Es wird jedoch darauf hingewiesen, dass die Erfindung ebenso auf Behältniszusammenstellungen mehrerer Behältnisse (wie etwa Sixpacks) anwendbar ist.

Insbesondere handelt es sich bei den Behältnissen um Getränkebehältnisse oder um Behältnisse für medizinische Produkte oder für Health Care Produkte.

Besonders bevorzugt dient die Vorrichtung zum stehenden Ausschleusen und/oder Ausleiten der Behältnisse. Bevorzugt werden die Behältnisse also stehend transportiert und auch in diesem stehenden Zustand ausgeschleust.

Bevorzugt sind die Behältnisse aus einer Gruppe von Behältnissen ausgewählt, welche Flaschen, Dosen, Pouches oder dergleichen enthält.

Besonders bevorzugt sind die Behältnisse aus einem Material hergestellt, welches aus einer Gruppe von Materialien hergestellt ist, welche Glas, PE, HDPE, PET, Metall oder Pulpe enthält.

Bevorzugt handelt es sich bei den Behältnissen um leere Behältnisse (falls etwa die Funktion eines Füllers überprüft werden soll), um teilbefüllte Behältnisse oder um volle Behältnisse.

Bei einer bevorzugten Ausführungsform weisen die Behältnisse eine vorgegebene Erstreckung in ihrer Längsrichtung auf und einen vorgegebenen maximalen Querschnitt. Bevorzugt ist dieser maximale Querschnitt der Behältnisse in einem Bodenbereich der Behältnisse vorgesehen. Bevorzugt ist die Erstreckung der Behältnisse in ihrer Längsrichtung größer als der maximale Querschnitt der Behältnisse.

Bevorzugt ist die Erstreckung der Behältnisse in ihrer Längsrichtung wenigstens um 50% größer als der maximale Querschnitt, bevorzugt wenigstens um 100% größer, bevorzugt wenigstens um 150% größer und besonders bevorzugt wenigstens um 200% größer.

Bevorzugt ist die Erstreckung der Behältnisse in ihrer Längsrichtung höchstens um 500% größer als der maximale Querschnitt, bevorzugt höchstens um 400% größer, bevorzugt höchstens um 350% größer und besonders bevorzugt höchstens um 300% größer.

Es ist darauf hinzuweisen, dass es sich bei dem hier beschriebenen Verfahren um einen hochdynamischen Vorgang handelt, bei dem von Behältnis zu Behältnis bei der Verarbeitung (etwa von Glasbehältnissen) lediglich 50ms zur Verfügung stehen, bei Dosen (vorteilhafteres Höhen/ Breitenverhältnis) teilweise weniger als 35ms.

Demzufolge stehen für den Verfahrweg des Ausleitelements je nach Anwendung nur 5-100ms zur Verfügung.

Vorteilhaft ist in diesem Zusammenhang, dass bei einer notwendigen Zustellung zur Grundposition der Platz (bedingt durch die Behälterrundungen) zwischen zwei Behältnissen "proaktiv" genutzt werden kann, also schon zwischen den Behältnissen zur Grundposition zugestellt wird/ werden kann.

Die oben erwähnte Ermittlung kann dabei insbesondere als Realwert beispielsweise in Millimeter erfolgen und/oder ausgegeben werden. Zu diesem Zweck kann ein "Closed Loop" (geschlossener Regelkreis) verwendet werden.

Besonders bevorzugt ist die Transportrichtung der Behältnisse linear und/oder geradlinig.

Besonders bevorzugt fördert die Transporteinrichtung Behältnisse mit einem Abstand zueinander, wobei jedoch auch ein aneinander liegender Transport der Behältnisse möglich wäre.

Bevorzugt beträgt ein Abstand zwischen zwei aufeinanderfolgenden Behältnissen wenigstens die Hälfte des Behältnisdurchmessers, bevorzugt wenigstens einen Behältnisdurchmesser.

Unter einem Ausstoßen in Querrichtung wird beispielsweise ein Ausstoßen mit einer Richtung von 90° gegenüber der Transportrichtung verstanden. Der Winkel kann jedoch auch geringer sein, insbesondere da die Behältnisse auch nach dem Stoß weiter transportiert werden und sich so in der Gesamtheit eine schräge Ausstoßrichtung ergibt (obwohl die Stoßrichtung des Kontaktelements bevorzugt senkrecht zu der Transportrichtung verläuft).

Vorzugsweise ist ein Winkel zwischen der Ausstoßrichtung der Transportrichtung zwischen +-45° und besonders bevorzugt zwischen +-45°.

Besonders bevorzugt transportiert die Transporteinrichtung die Behältnisse einbahnig.

Bei einer weiteren vorteilhaften Ausführungsform weist die Vorrichtung eine Positionserfassungseinrichtung auf, welche dazu geeignet und bestimmt ist, eine Position der Behältnisse bezüglich der Transporteinrichtung zu erfassen, wobei insbesondere eine Position der Behältnisse quer zur Transportrichtung erfasst wird oder erfassbar ist.

Besonders bevorzugt ist die Positionserfassungseinrichtung aus einer Gruppe von Positionserfassungseinrichtungen ausgewählt, welche Kameras, insbesondere wenigstens eine oberhalb des Transportpfads der Stückgüter angeordnete Kamera, Näherungssensoren, Abstandssensoren, insbesondere seitlich neben dem Transportband angeordnete Abstandssensoren, 2-D-Vermessungseinrichtungen und dergleichen enthält.

Damit erfolgt bevorzugt die Positionserfassung mittels eines sensor- oder kamerabasierenden Systems.

Bei einer weiteren vorteilhaften Ausführungsform weist die Vorrichtung eine Steuerungseinrichtung auf, welche dazu geeignet ist, die Grundstellung des Kontaktelements in Abhängigkeit von der von der Position der Behältnisse quer zur Transportrichtung zu steuern.

Weiterhin ist es möglich, dass das Ergebnis dann individuell an die Ausleiteinrichtung weitergegeben wird, damit sich das Kontaktelement immer auf den gleichen Abstand zu den Behältnissen einregeln kann und dann immer den gleichen Leerhub machen kann.

Die Antriebseinrichtung ist bevorzugt schnell genug, sodass sie auch bei hochperformanten Systemen in Echtzeit zwischen zwei Behältnissen erfolgen kann, da die Positionsdifferenz typischerweise im Bereich von 3-5 mm ist.

Durch die Erfindung wird eine Möglichkeit geschaffen, dass ein immer gleicher Leerhub bis zu den Behältnissen besteht und dadurch immer der gleiche Kontaktpunkt in Laufrichtung an dem Behältnis ermöglicht wird und dadurch eine bestmögliche Ausleitung mit Verringern einer Trudeltendenz ermöglicht wird.

Dies ist aber auch bei gemischt verarbeitetem Behältnismaterial und/oder abweichenden Durchmessern der Behältnisse möglich. Dies kann beispielsweise bei einer Behältersortierung, bei Highspeed-Glaslinien mit Fremdbehältererkennung im Einlauf eines Leerflascheninspektors möglich sein.

Es wäre auch möglich, das Kontaktelement, welches insbesondere als Pusherstößel ausgeführt ist, nicht behältnisspezifisch, sondern beispielsweise in einen 3-Sigma-Bereich, d.h. in einer Position, wo er zu wenigstens 99% nicht zurückweichen muss, d.h. <1 % der Flaschen sind zu nahe am Pusher und müssen dann individuell zurückziehen, wenn ein Behältnis theoretisch mit dem Kontaktelement kollidieren würde bzw. vorzufahren, wenn das Behältnis bzw. Stückgut viel zu weit für eine normale Ausleitung entfernt ist.

Die Erfindung nutzt die Tatsache, dass sich die Behältnisse zwischen der Vermessung und der Ausleiteinrichtung nicht mehr seitlich verschieben bzw. nicht mehr seitlich verrutschen. Daher wäre es sogar möglich, auf die typischen Führungsgeländer zu verzichten oder diese nur als Fallschutz zu verwenden und/oder diese immer auf die größtmöglichen Behältnisse einzustellen. Auf diese Weise ist keine Änderung bei einem Sortenwechsel nötig.

Wenn die Führungsgeländer nicht mehr verändert werden müssen, ist es auch möglich, die Ausleiteinrichtung nicht mehr sortenabhängig in der Tiefe zu verstellen. Auf diese Weise kann eine horizontale Verstellung entfallen.

Die eingesparten Verstellungen helfen auch, bei einem Sortenwechsel rein über neue Parameter den ganzen Bereich in Sekunden auf eine neue Sorte umzustellen. Dies bedeutet einen großen Wettbewerbsvorteil.

Besonders bevorzugt steuert die Steuerungseinrichtung die Ausleiteinrichtung in Echtzeit.

Besonders bevorzugt ist das Kontaktelement zwischen der Grundstellung und der Ausschleusstellung linear beweglich. Es wäre jedoch auch möglich, dass das Kontaktelement sich entlang einer kreisförmigen Bewegungsbahn bewegt.

Bei einer bevorzugten Ausführungsform ist auch die Ausschleusestellung variabel. Diese kann beispielsweise an unterschiedliche Durchmesser der Behältnisse angepasst werden.

Bei einer weiteren bevorzugten Ausführungsform weist die Vorrichtung eine weitere Erfassungseinrichtung auf, welche dazu geeignet und bestimmt ist, einen Durchmesser der transportierten Behältnisse zu erfassen.

Bei einer weiteren vorteilhaften Ausführungsform ist die Antriebseinrichtung eine elektrisch betriebene Antriebseinrichtung und insbesondere ein positionsgeregelter Linearmotor.

Bei einer weiteren vorteilhaften Ausführungsform ist die Antriebseinrichtung eine elektrisch betriebene Antriebseinrichtung und insbesondere eine positionsgeregelte Antriebseinrichtung, insbesondere eine positionsgeregelte Excenterscheibe oder weist eine solche auf.

Die Verwendung eines Servomotors und/oder eines positionsgeregelten Antriebsmotors erlaubt eine hochdynamische Bewegung des Kontaktelements und darüber hinaus eine hohe Präzision der Bewegung.

Bei einer weiteren vorteilhaften Ausführungsform ist die Antriebseinrichtung eine Antriebseinrichtung welche mehrere in den Behältnisstrom einklappbare, eine Kurve bildende Ausleitelemente umfasst.

Bei einer weiteren vorteilhaften Ausführungsform ist der Abstand zwischen der Grundstellung des Kontaktelements und der Ausschleusestellung des Kontaktelements größer als 2 mm, bevorzugt größer als 10 mm, bevorzugt größer als 15 mm.

Bei einer weiteren vorteilhaften Ausführungsform ist ein Abstand zwischen der Grundstellung des Kontaktelements und der Ausschleusestellung des Kontaktelements kleiner als 100 mm, bevorzugt kleiner als 80mm, bevorzugt kleiner als 60mm.

Besonders bevorzugt ist die Grundstellung des Kontaktelements um mehr als 1 mm, bevorzugt um mehr als 2 mm und bevorzugt um mehr als 3 mm variabel.

Bei einer weiteren vorteilhaften Ausführungsform ist die Grundstellung des Kontaktelements um weniger als 60mm bevorzugt um weniger 40mm und besonders bevorzugt um weniger als 20mm variabel.

Bei einer weiteren vorteilhaften Ausführungsform weist die Transporteinrichtung ein Transportband auf, welches die Behältnisse aufrechtstehend transportiert und besonders bevorzugt weist die Transporteinrichtung wenigstens ein Seitenführungselement auf, welches eine Bewegung der Behältnisse wenigstens abschnittsweise quer zu der Transportrichtung begrenzt. Besonders bevorzugt erstreckt sich das Seitenführungselement in der Transportrichtung.

Bevorzugt erfolgt die Ausleitung der Behältnisse in einer stehenden Position der Behältnisse. Dies ist erwünscht, weil umgefallene Behältnisse die ablaufenden Transportbänder verstopfen können und dann ein manuelles Ausleiten bei der Weiterverarbeitung erforderlich ist. Daneben kann bei umgefallenen Behältnissen ggfs. Flüssigkeit auslaufen, was aus hygienischen Gründen unvorteilhaft ist.

Bei einer weiteren vorteilhaften Ausführungsform ist die Transporteinrichtung dazu geeignet und bestimmt, die Behältnisse mit einer Transportgeschwindigkeit zu transportieren, die zwischen 0,2 m/s und 3 m/s liegt.

Bei einer weiteren vorteilhaften Ausführungsform ist das Seitenführungselement quer zu der Transportrichtung verstellbar. Besonders bevorzugt weist die Vorrichtung ein zweites Seitenführungselement auf, welches bevorzugt ebenfalls den Transportfahrt der Behältnisse begrenzt, wobei besonders bevorzugt Behältnisse zwischen dem ersten Seitenführungselement und dem zweiten Seitenführungselement transportierbar sind.

Besonders bevorzugt ist, wenigstens eines dieser Seitenführungselemente quer zu der Transportrichtung verstellbar.

Bei einer weiteren vorteilhaften Ausführungsform weist die Vorrichtung wenigstens eine Sensoreinrichtung auf, welche dazu geeignet und bestimmt ist einen Fehlerzustand der transportierten Behältnisse zu bestimmen.

Dabei kann die oben erwähnte Positionserfassungseinrichtung ein Teil dieser Sensoreinrichtung sein. Insbesondere ist es möglich, dass im Rahmen einer Fehlerkontrolle auch eine Position der Behältnisse durchgeführt wird.

Besonders bevorzugt weist diese Sensoreinrichtung wenigstens eine Bildaufnahmeeinrichtung auf, welche ein ortsaufgelöstes Bild der transportierten Behältnisse aufnimmt.

Weiterhin kann die Positionserfassungseinrichtung und/oder die Sensoreinrichtung eine oder weitere Funktionen haben.

So kann durch die Positionserfassungseinrichtung und die Sensoreinrichtung (bei denen es sich um das gleiche Bauteil und/oder Element handeln kann) eine Dichtflächeninspektion oder Deckel(logo)erkennung durchgeführt werden.

Dabei kann die Sensoreinrichtung und/oder Positionserfassungseinrichtung über dem zu inspizierenden Behältnis und insbesondere konzentrisch darüber angeordnet sein.

Auch eine 360° Deckelhochstandserkennung kann vorgesehen sein und/oder auch eine Behälterseitenwanderkennung.

Besonders bevorzugt ist der Fehlerzustand aus einer Gruppe von Fehlerzuständen ausgewählt, welche nicht ordnungsgemäß verschlossene Behältnisse, fehlerhaft befüllte Behältnisse, Fremdkörper in Behältnissen, fehlerhaft angeordnete Etiketten, Schäden der Behältnisse und dergleichen enthält.

Die vorliegende Erfindung ist weiterhin auf ein Verfahren zum Ausschleusen von Behältnissen oder Behältniszusammenstellungen, aus einem Behältnisstrom gerichtet, wobei eine Transporteinrichtung die Behältnisse entlang einer vorgegebenen Transportrichtung transportiert und eine Ausschleuseeinrichtung einzelne dieser Behältnisse(oder Gruppen von Behältnissen) aus dem Behältnisstrom und quer zu der Transportrichtung ausschleust.

Dabei weist die Ausschleuseeinrichtung ein Kontaktelement auf, welches quer zu der Transportrichtung zwischen einer Grundstellung, in welche es ein Behältnis nicht kontaktiert und einer Ausschleusestellung, in welcher es ein Behältnis kontaktiert bewegt wird, um das Behältnis aus dem Stückgutstrom auszuschleusen. Weiterhin weist die Ausschleuseeinrichtung eine Antriebseinrichtung zum Bewegen des Kontaktelements auf.

Erfindungsgemäß wird die Grundstellung in Abhängigkeit von einer Position der Behältnisse bezüglich der Transporteinrichtung (und insbesondere einer Position quer zu der Transportrichtung) und in der Bewegungsrichtung des Kontaktelements variiert.

Bei einer bevorzugten Ausführungsform erfasst eine Positionserfassungseinrichtung eine Produktion der Behältnisse bezüglich der Transporteinrichtung und erfasst insbesondere eine Position der Behältnisse in einer Richtung quer zu der Transporteinrichtung.

Besonders bevorzugt wird die Grundstellung in Abhängigkeit von der Position der Behältnisse quer zu der Transportrichtung gesteuert.

Weitere Vorteile und Ausführungsformen ergeben sich aus den beigefügten Zeichnungen: Darin zeigen:
- Fig. 1: eine Darstellung einer erfindungsgemäßen Vorrichtung bei idealer Anordnung der Stückgüter;
- Fig. 2: die Vorrichtung aus Fig. 1 bei einer reellen Situation der Behältnisausrichtung;
- Fig. 3: eine Darstellung der erfindungsgemäßen Vorrichtung bei einer ersten Behältnisposition; und
- Fig. 4: eine Darstellung der Vorrichtung bei einer zweiten Behältnisposition.

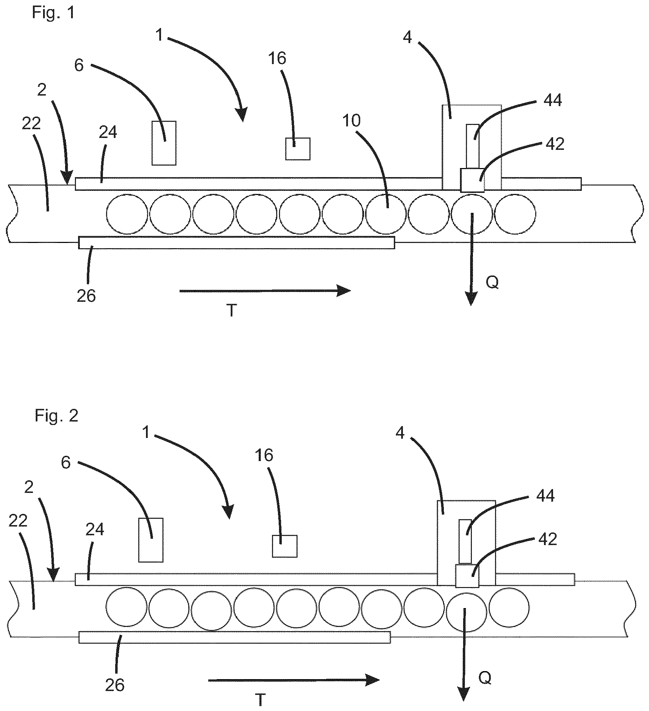

Fig. 1 zeigt eine erfindungsgemäße Vorrichtung 1 zum Transportieren von Behältnissen 10. Diese Behältnisse können dabei beispielsweise Kunststoffbehältnisse oder Glasbehältnisse sein. Insbesondere handelt es sich bei den Behältnissen um bereits befüllte und verschlossene Behältnisse.

Dabei bezieht sich das Bezugszeichen 2 auf eine Transporteinrichtung, welche hier ein Transportband 22 aufweist, welches die Behältnisse 10 entlang der Transportrichtung T transportiert. Das Bezugszeichen 24 kennzeichnet ein erstes Seitenführungsgeländer und das Bezugszeichen 26 und zweites Seitenführungsgeländer.

Eine Erfassungseinrichtung 6 (nur schematisch gezeigt) erfasst eine Position der Behältnisse insbesondere in einer Querrichtung Q. Das Bezugszeichen 16 kennzeichnet eine Steuerungseinrichtung, welche eine in ihrer Gesamtheit mit 4 gekennzeichnete Ausschleuseeinrichtung steuert.

Diese Ausschleuseeinrichtung weist hier ein Kontaktelement 42 wie einen Stößel auf, der dazu dient, die Behältnisse in einer Transportrichtung Q auszuschleusen. Dieses Kontaktelement ist damit insbesondere in der Querrichtung Q bewegbar.

Das Bezugszeichen 44 kennzeichnet eine Antriebseinrichtung wie etwa ein Linearmotor, welcher das Kontaktelement 42 bewegt.

Weiterhin weist die Vorrichtung eine weitere (nicht gezeigte) Erfassungseinrichtung auf, welche dazu geeignet und bestimmt ist, einen Fehlerzustand der Behältnisse zu erfassen. Die Positionserfassungseinrichtung kann Bestandteil dieser weiteren Erfassungseinrichtung sein.

Bei der in Fig. 1 gezeigten Situation sind die Behältnisse 10 ideal alle in der gleichen Querposition ausgerichtet. In dieser Position müsste die Stellung des Kontaktelements nicht verändert werden. Das Kontaktelement 42 ist hier in einer Grundstellung gezeigt, in der es die Behältnisse 10 nicht kontaktiert.

Fig. 2 zeigt die Vorrichtung 1 aus Fig. 1 in einer realen Situation. Man erkennt, dass hier die einzelnen Behältnisse 10 in der Querrichtung nicht konstant ausgerichtet sind, sondern sich auf unterschiedlichen Positionen befinden. Das Kontaktelement 42 ist hier ebenfalls in der Grundstellung befindlich.

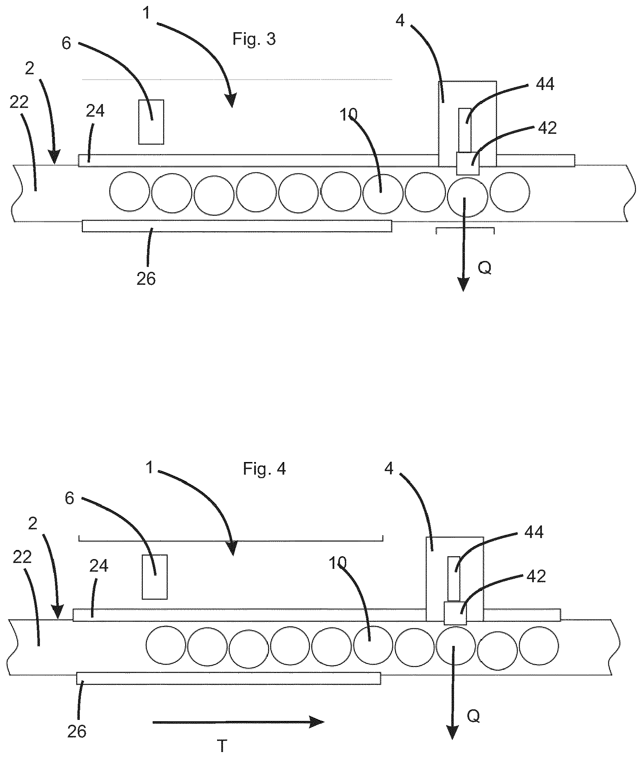

Fig. 3 zeigt eine weitere realistische Situation. Hier ist das Kontaktelement 42 auf die Position des Behältnisses, welches gerade an diesem Kontaktelement vorbei bewegt wird, ausgerichtet. Die Ausrichtung des Kontaktelements bzw. die Ansteuerung der Antriebseinrichtung 44 erfolgt hier in Abhängigkeit von der erfassten Position des Behältnisses 10.

Bevorzugt weist die Vorrichtung eine Zuordnungseinrichtung auf, welche die Position eines Behältnisses in der Querrichtung erfasst und entsprechende Steuerungseinrichtung mit einem vorgegebenen Versatz bzw. einen zeitlichen Versatz ansteuert. Dabei kann auch die Transportgeschwindigkeit des Transportbands 22 berücksichtigt werden. Wenn zum Beispiel festgestellt wird, dass ein bestimmtes Behältnis X fehlerhaft ist und ausgestoßen werden soll, kann das Kontaktelement in eine geeignete Grundstellung für dieses Behältnis verfahren werden und ausgehend von dieser Grundstellung dieses Behältnis X ausgestoßen werden.

Fig. 4 zeigt die erfindungsgemäße Vorrichtung in einer weiteren Situation In dieser Situation ist die Position des Behältnisses 10 derart, dass dieses näher an dem Kontaktelement 42 ist. Entsprechend ist das Kontaktelement auch leicht zurückgezogen, d. h. die Grundstellung des Kontaktelements in Fig. 4 unterscheidet sich von der Grundstellung des Kontaktelements in Fig. 3. Es wäre dabei möglich, das Kontaktelement permanent zu verschieben, jeweils in Abhängigkeit von der Position der einzelnen Behältnisse quer zu der Transportrichtung T.

In den Fig. 1-4 sind die Behältnisse aneinander anstoßend dargestellt. Vorteilhaft werden jedoch die Behältnisse mit einem bestimmten Abstand in der Transportrichtung T zueinander transportiert.

Bevorzugt ist eine Position der Seitenführungseinrichtungen 24 und 26 quer zu der Transportrichtung einstellbar.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung zum Ausschleusen von Behältnissen aus einem Behältnisstrom mit einer Transporteinrichtung (2), welche die Behältnisse entlang einer vorgegebenen Transportrichtung (T) transportiert und mit einer Ausschleuseeinrichtung (4), welche dazu geeignet und bestimmt ist, einzelne dieser Behältnisse (10) aus dem Behältnisstrom und quer zu der Transportrichtung auszuschleusen, wobei die Ausschleuseeinrichtung (4) ein Kontaktelement (42) aufweist, welches quer zu der Transportrichtung bewegbar ist zwischen einer Grundstellung, in welcher es ein Behältnis (10) nicht kontaktiert und einer Ausschleusestellung, in welcher es ein Behältnis (10) kontaktiert, um es aus dem Behältnisstrom auszuschleusen und wobei die Ausschleuseeinrichtung (4) eine Antriebseinrichtung (44) zum Bewegen des Kontaktelements (42) aufweist,
**dadurch gekennzeichnet, dass**
die Grundstellung in Abhängigkeit von einer Position der Behältnisse (10) bezüglich der Transporteinrichtung und in der Bewegungsrichtung des Kontaktelements (42) variabel ist.

2. Vorrichtung nach Anspruch 1,
**dadurch gekennzeichnet, dass**
die Vorrichtung (1) eine Positionserfassungseinrichtung (6) aufweist, welche dazu geeignet ist, eine Position der Behältnisse bezüglich der Transporteinrichtung zu erfassen und insbesondere eine Position der Behältnisse quer zu der Transportrichtung zu erfassen.

3. Vorrichtung (1) nach dem vorangegangenen Anspruch,
**dadurch gekennzeichnet, dass**
die Positionserfassungseinrichtung aus einer Gruppe von Positionserfassungseinrichtungen ausgewählt ist, welche Kameras, insbesondere wenigstens eine oberhalb des Transportpfads der Behältnisse angeordnete Kamera, Näherungssensoren, Abstandssensoren, insbesondere seitlich neben dem Transportpfad angeordnete Abstandssensoren, 2D Vermessungseinrichtungen und dergleichen enthält.

4. Vorrichtung (1) nach dem vorangegangenen Anspruch,
**dadurch gekennzeichnet, dass**
die Vorrichtung (1) eine Steuerungseinrichtung aufweist, welche dazu geeignet ist, die Grundstellung in Abhängigkeit von der von der Position der Behältnisse quer zu der Transportrichtung zu steuern.

5. Vorrichtung nach wenigstens einem der vorangegangenen Ansprüche,
**dadurch gekennzeichnet, dass**
das Kontaktelement (42) zwischen der Grundstellung und der Ausschleusestellung linearbeweglich ist.

6. Vorrichtung nach wenigstens einem der vorangegangenen Ansprüche,
**dadurch gekennzeichnet, dass**
die Antriebseinrichtung (44) eine elektrisch betriebene Antriebseinrichtung (44) und insbesondere ein insbesondere positionsgeregelter Linearmotor ist.

7. Vorrichtung nach wenigstens einem der vorangegangenen Ansprüche,
**dadurch gekennzeichnet, dass**
ein Abstand zwischen der Grundstellung des Kontaktelements (42) und der Ausschleusestellung des Kontaktelements (42) größer ist als 2mm, bevorzugt größer als 10mm, bevorzugt größer als 15mm und/oder ein Abstand zwischen der Grundstellung des Kontaktelements (42) und der Ausschleusestellung des Kontaktelements (42) kleiner ist als 100mm, bevorzugt kleiner als 80mm, bevorzugt kleiner als 60mm.

8. Vorrichtung nach wenigstens einem der vorangegangenen Ansprüche,
**dadurch gekennzeichnet, dass**
die Grundstellung des Kontaktelements (42) um mehr als 1 mm, bevorzugt um mehr als 2mm und besonders bevorzugt um mehr als 3mm variabel ist und/oder die Grundstellung des Kontaktelements (42) um weniger als 60mm, bevorzugt um weniger als 40mm und besonders bevorzugt um weniger als 20mm variabel ist.

9. Vorrichtung nach wenigstens einem der vorangegangenen Ansprüche,
**dadurch gekennzeichnet, dass**
die Transporteinrichtung ein Transportband (22) aufweist, welches die Behältnisse aufrecht stehend transportiert und bevorzugt die Transporteinrichtung (2) wenigstens ein Seitenführungselement (24) aufweist, welches eine Bewegung der Behältnisse wenigstens abschnittsweise quer zu der Transportrichtung begrenzt.

10. Vorrichtung nach wenigstens einem der vorangegangenen Ansprüche,
**dadurch gekennzeichnet, dass**
die Vorrichtung wenigstens eine Sensoreinrichtung aufweist, welche dazu geeignet und bestimmt ist, einen Fehlerzustand und/oder die Position der transportierten Behältnisse zu erfassen.

11. Verfahren zum Ausschleusen von Behältnissen (10) oder Behältniszusammenstellungen aus einem Behältnisstrom wobei eine Transporteinrichtung (2) die Behältnisse entlang einer vorgegebenen Transportrichtung (T) transportiert und eine Ausschleuseeinrichtung (4) einzelne dieser Behältnisse (10) aus dem Behältnisstrom und quer zu der Transportrichtung ausschleust, wobei die Ausschleuseeinrichtung ein Kontaktelement (42) aufweist, welches quer zu der Transportrichtung zwischen einer Grundstellung, in welcher es ein Behältnis (10) nicht kontaktiert und einer Ausschleusestellung, in welcher es ein Behältnis kontaktiert, bewegt wird um das Behältnis aus dem Behältnisstrom auszuschleusen und wobei eine Antriebseinrichtung (44) das Kontaktelement bewegt,
**dadurch gekennzeichnet, dass**
die Grundstellung in Abhängigkeit von einer Position der Behältnisse bezüglich der Transporteinrichtung und in der Bewegungsrichtung des Kontaktelements (42) variiert wird.

12. Verfahren nach Anspruch 11,
**dadurch gekennzeichnet, dass**
die Vorrichtung (1) eine Positionserfassungseinrichtung (6) eine Position der Behältnisse bezüglich der Transporteinrichtung erfasst und insbesondere eine Position der Behältnisse quer zu der Transportrichtung erfasst.

13. Verfahren nach dem vorangegangenen Anspruch,
**dadurch gekennzeichnet, dass**
die Grundstellung in Abhängigkeit von der von der Position der Behältnisse quer zu der Transportrichtung gesteuert wird.
